# EUROPEAN PATENT APPLICATION

(11) **EP 1 383 252 A1**
(43) Date of publication of application: **21.01.2004**
(21) Application number: 02291821.3
(22) Date of filing: 18.07.2002
(51) Int. Cl.: H04B 7/204

(54) **Method and system for routing bursts in a satellite communication system**

(71) Applicant: ALCATEL, 75008 Paris (FR)
(72) Inventor: Rodriguez Martinez, Maria Africa, 28005 Madrid (ES); Prat Aparicio, Jose, 28760 Tres Cantos, Madrid (ES)
(74) Representative: Smith, Bradford Lee

(57) **Abstract**

System for addressing bursts in a multi-spot beams satellite communication system that uses DVB-RCS standard traffic bursts for carrying over uplink useful data from active return channel satellite terminal to several destinations through at least a multi-spot beams satellite. The active return channel satellite terminal adds a predetermined number of addressing bits (22) into the preamble (21) of the traffic bursts for indicating intended destination. On-board the satellite is retrieved the addressing bits (22) added to the preamble (21) and at least a (or several) spot beam is assigned to the traffic burst based on the addressing bits (22) contained within the preamble (22).

## Description

### BACKGROUND OF THE INVENTION

The present invention relates to a satellite communication system in a multimedia interactive network. More particularly, a method for routing burst over multi-spot beams regenerative satellite belongs to a satellite interactive network.

### STATE OF THE ART

A multi-spot beams satellite communication system in a multimedia interactive network provides a plurality of users to be offered a multimedia service such that the users may communicate with several multimedia service provider or other users via DVB-RCS (digital video broadcasting-return channel satellite) standard to the satellite.

A system is known from US Patent Application publication number 20020006118, date of publication January 17, 2002, Rodríguez et al. describes a multi-spot beams satellite that connects a plurality of user through a return channel according to the DVB-RCS standard via an uplink channel to the satellite.

On-board the satellite is received a multiplexing signal from a return channel satellite terminal. This signal is sent in DVB-RCS format. After being received in the satellite, a means carries out functions of cross-connection and/or multicasting of channels to different coverage areas.

The cross-connectivity feature is achieved by means of an interconnection matrix stored on-board the satellite with a granularity of one MPEG2 packet. The interconnection matrix performs the task to route the received traffic bursts to intended destination, for example, service providers, gateways, end users, or the like.

Then, every time a user such as an end-user, a service provider or even a Gateway wishes to start a session, the return channel satellite terminal connected to this user must exchange information messages with the network control centre via the satellite. The messages having information related to the intended destination. Then the network control centre transmits information directly to the satellite for carrying out changes into the interconnection matrix based on the received messages from the return channel satellite terminal.

As a consequence, there are several signalling messages have to be interchange between network control centre, return channel satellite terminal and on-board processor the satellite just before the user is authorised to transmit his data traffic as DVB-RCS burst. Therefore, it is recognised that there is an increased signalling traffic can become extremely complex, and this could potentially limit manageability and robustness of the satellite system.

The interconnection matrix is updated from a network control centre which provides information signal for the operation of the multi-spot beams satellite. As a result, the processor on-board the satellite accomplishes the task of routing the traffic bursts on-board the satellite is more complex.

Therefore, there is a necessity to provide a simple process to route traffic bursts that avoid changes as at the burst format as at the equipment specifically prepared for the above mentioned service either on-board the satellite, the return channel satellite terminal, the network control centre, so on. Also, it is necessary released processing resources on-board the satellite, the return channel satellite terminal, the network control centre.

### SUMMARY OF THE INVENTION

The aforementioned problems are overcome by means of the multi-spot regenerative satellite communication system in a multimedia interactive network object of the present invention, which permits end users to be offered a several multimedia services such that the end user may communicate with the multimedia service provider or other users via the DVB-RCS standard to the multi-spot beams regenerative satellite, all of this in a substantially simple manner.

Thus, an object of the present invention is the provision of a multi-spot satellite communication system in a multimedia interactive network, which comprises at least a return channel satellite system capable of setting up bidirectional communication with a multi-spot beams regenerative satellite, the bidirectional communication comprising a downlink direction of transmitting from the satellite and an uplink direction of transmitting to the satellite, wherein the communication in the uplink direction is transmitted using DVB-RCS standard format to the satellite and is suitable for carrying addressing bits added to the preamble of the traffic bursts by means of the actives return channel satellite terminal.

The objective is achieved through an extra bits attached to the preamble of traffic bursts, i.e. ATM cells or MPEG2-TS packets, by means an adder means including into the return channel satellite terminal.

On board the satellite a retriever means extracting the addressing information coming from the return channel satellite terminals into the traffic bursts, and an allocater means assignees at least a spot beams to each traffic burst received based on the addressing bits retrieved.

The addressing bits have addressing information related to intended destination, i.e. multimedia service providers, users and gateways connected to the multi-spot beams regenerative satellite.

As a consequence, the traffic bursts are self-routed on-board the satellite since the invention method allows return channel satellite terminal to transmit addressing information to the multi-spot beams satellite to indicate which is the intended destination for the traffic bursts.

According to an aspect of the invention the return channel satellite terminal transmitted signal is suitable for carrying addressing information added into the preamble of the traffic burst.

According to another aspect of the invention the system comprises at least a retriever means for extracting the addressing information attached to the preamble of the traffic burst carrying over the uplink.

According to another aspect of the invention the traffic burst are addressing without necessity for use an interconnection matrix on-board the satellite. As a result, the computational load and complexity of the on-board processor are reduced on-board the satellite.

According to another aspect of the invention the signalling from a network control centre to on-board processor and vice versa for re-configuring the interconnection matrix are no longer needed, so freeing up processing resources. As a result, the on-board processor architecture is simplified.

According to another aspect of the invention the allocating a series of traffic bursts to the actives return channel satellite terminal, by means of the network control centre, is carried out in a more efficient and flexible way.

According to another aspect of the invention the return channel satellite terminal is suitable for establishing communication with the multi-spot beams regenerative satellite in the uplink direction using DVB-RCS standard traffic burst formats.

According to another aspect of the invention the overall system of the multimedia network is simplified, as a consequence, the costs of installation and services are kept low.

### BRIEF DESCRIPTION OF THE DRAWINGS

A more detailed explanation of the invention is given in the following description based on the attached figures in which:
- Figure 1 shows in a schema a multi-spot regenerative satellite communication system according to the invention, and
- Figure 2 shows a DVB-RCS traffic burst format according to the invention.

### DESCRIPTION OF THE INVENTION

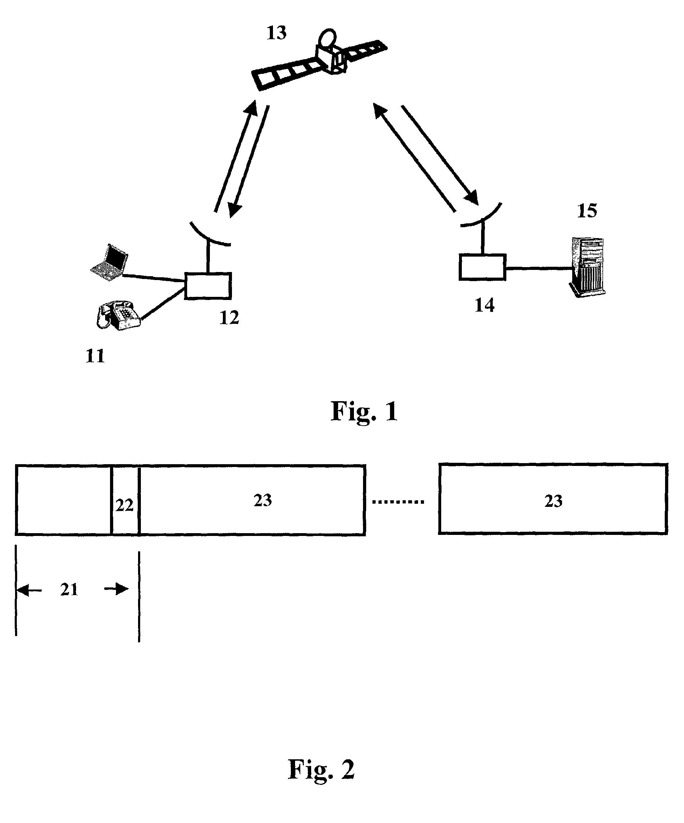

The figure 1 depicts a several return channel satellite terminals 12 will be connects to an interaction satellite network, having also of a multi-spot beams regenerative satellite 13, a gateway 14 and a network control centre.

The return channel satellite terminals 12 may be connected to several kind of the user such as end user or consumer, professional consumer, which is a user with the need for broadband, high-quality services, and corporate will represent a larger group of users behind one terminal, typically with a LAN connected to the return channel satellite terminals 12.

In FIG. 1 only one user 11 and a RCST 12 are shown for reasons of simplicity, it being understood that there can be various users present in communication with the satellite 13.

Therefore, the user side can establish connection among them or with gateways connected to other networks as IP, ISDN, PSTN, multimedia service providers, and so on.

In addition, the user side transmits and receives data traffic through of the RCST 12, which communicates with the multi-spot beams regenerative satellite 13. The establish link is known as return channel and over that return channel the multi-spot beams regenerative satellite 13 receives signals transmitted from a user 11 connected to a RCST 12.

Therefore, the data traffic are carrying over the return channel, namely uplink signal, of the type of signals that comply with the aforementioned DVB-RCS standard traffic burst formats and the data traffic received in the RCST 12 from the satellite 13 comply with the DVB-S standard formats.

The traffic data and control data are transmitted in the type of bursts. Two types of the traffic burst carrying either ATM cells or MPEG2-TS packets are defined into the DVB-RCS standard. See figure 2 for a description of the traffic burst.

Therefore, each traffic burst format contains a preamble 21 and an encoded burst 23. Where the preamble size is variable and is used by the satellite processor for the purpose of burst detection and synchronization on-board the satellite 13. Traffic bursts are used for carrying useful data from the RCST 12 to the intended destination through the satellite 13, and vice versa.

The multi-spot beams regenerative satellite 13 have a multiple coverage zone, making it possible for various end users 11 to request, separately, multimedia services independently of the location where they are at, provided that they are under the coverage zone of the multi-spot satellite 13.

With this arrangement the user 11 requests, by means of traffic burst, a predetermined multimedia service to the intended service provider 15. Before the traffic bursts are sent to the satellite 13 from the RCST 12, addressing information is attached to the preamble of the traffic burst by means of an adder means belongs to the broadcasting RCST 12.

According to the DVB-RCS standard, the preamble size is variable; as a consequence, several bits may be added to the preamble 21 without interfering in the performance of burst detection and synchronization. For example, the addressing bits 22 can be added at the end of the preamble 21.

The satellite 13 acts to transfer the request to the intended destination. The satellite 13 has a retrieve means that retrieves the addressing bits 22 included into the preamble 21. This information is then processed in a conventional manner in order to deal with the request of the intended destination.

The satellite 13 comprises also a allocating unit suitable for carrying out the functions of assigning a spot beam, belongs to the multi-spot beams satellite 13, to each traffic burst. The assignment of at least a spot-bema is based on the addressing information retrieved on-board the satellite. Following the traffic burst is transmitted to the requested destination.

The traffic bursts with routing information 22 into the preamble 21 have the format shown on figure 2. Therefore, it is not necessary exchange routing information between the RCST 12 to the NCC (no shown in figure 1).

In addition, the routing information 22 is added by the RCST for the purpose of indicating to the routing means on-board the satellite 13, which is the intended destination of each traffic burst, that is, to indicate the destination spot-beam for every traffic burst.

This process allows to an active RCST to insert and transmit routing management information to the satellite into the preamble of the assigned traffic burst. Thus, the return channel can utilize to support routing information.

The routing message has not a fixed length and must include a security mechanism in order to assure quasi error free detection QEF, namely with the appropriate error control coding.

In addition, the on-board the satellite can be obtain information such as intended destination for each traffic bursts.

## Claims

1. **Method for addressing bursts in a multi-spot beams satellite communication system** that uses DVB-RCS standard traffic bursts for carrying over return channel useful data from actives return channel satellite terminal (12) to intended destination through at least a multi-spot beams satellite (13); **characterised in that** the method includes the steps of:
- Adding, at the active return channel satellite terminal (12), a predetermined number of addressing bits into the preamble of the traffic bursts for indicating intended destination,
- Retrieving, on-board the multi-spot beams satellite (13), the addressing bits (22) added to the preamble (21),
- Allocating at least a spot beam of the satellite (13) to each traffic burst based on the addressing bits (22) contained within the preamble (21).

2. **Method for addressing** according to claim 1, transmitting each traffic burst to intended destination by means of the allocated spot beam.

3. **System for addressing bursts in a multi-spot beams satellite communication system** that uses DVB-RCS standard traffic bursts for carrying over return channel useful data from active return channel satellite terminal (12) to several destinations through at least a multi-spot beams satellite (13); **characterised in that** the system comprises means is adapted to add a predetermined number of addressing bits (22) into the preamble (21) of the traffic bursts for indicating intended destination at the active return channel satellite terminal (12); a means is configurable to retrieve the addressing bits (22) added to the preamble (21) on-board the satellite (13); a means is adapted to allocate at least a spot beam of the satellite (13) to each traffic burst based on the addressing bits (22) received from the active return channel satellite terminal (12).

4. **System for addressing** according to claim 3, furthermore comprises means is configurable to transmit each traffic burst to intended destination by means of the allocating spot beam.

5. **Return channel satellite terminal** according to claim 3, includes adder means is adapted to add addressing bits into the preamble (21) of traffic bursts for indicating intended destination.

6. **Satellite** according to claim 3, comprises retriever means is configures to retrieve the addressing bits added to the preamble (21) on-board the multi-spot beams satellite (13).

7. **Satellite** according to claim 5, includes allocater means is adapted to allocate at least a spot beam of the multi-spot beams satellite (13) to each traffic burst based on the addressing bits received from active return channel satellite terminal (12).
